# EUROPEAN PATENT SPECIFICATION

(11) **EP 1 105 443 B1**
(45) Date of publication and mention of the grant of the patent: **12.11.2003**
(21) Application number: 99942789.1
(22) Date of filing: 19.07.1999
(51) Int. Cl.: C09K 17/18, C09K 17/22, C05G 3/00, C05G 3/04, C05C 9/00

(54) **SOIL TREATMENT COMPOSITIONS AND THEIR USE**
ZUSAMMENSTZUNGEN ZUR BODENBEHANDLUNG UND IHRE VERWENDUNG
COMPOSITIONS DE TRAITEMENT DU SOL ET LEUR UTILISATION

(30) Priority: 31.07.1998 GB 9816784
(43) Date of publication of application: 13.06.2001
(73) Proprietor: Ciba Specialty Chemicals Water Treatments Limited, Bradford, West Yorkshire BD12 0JZ (GB)
(72) Inventor: ROSE, Simon, Alexander, Hanson, Bradford, West Yorkshire BD2 2HX (GB); TURNER, Jayne, Anne, Keighley, West Yorkshire BD22 9RH (GB)
(86) International application number: EP9905126
(87) International publication number: WO00008114

(56) References cited:
- EP-A- 0 415 141
- WO-A-85/01938
- WO-A-86/06714
- DE-A- 3 344 638
- US-A- 4 227 911

## Description

This invention relates to compositions for soil treatment which can provide both fertilisation and soil stabilisation benefits whilst being easy to handle using conventional equipment, and their use in irrigation methods.

It is well known in agriculture to apply various inorganic fertilisers to growing areas. The growing areas may be crop areas, which can be very large, or smaller growing areas such as those in greenhouses. The fertilisers can be supplied in various forms, in particular as solid compositions, or as suspensions or solutions of the fertiliser in a liquid. Fertiliser solutions are generally supplied by the manufacturer as an aqueous concentrate in large batches of size around 1 ton in weight. The solutions contain high concentrations, often 10 to 80 wt.% (dry solids), of dissolved inorganic fertiliser. It is usual to dose the concentrated fertiliser solution into irrigation water so that the solution is diluted and the fertiliser is applied to the soil during irrigation.

Various irrigation systems have been devised for convenient dosing of concentrated fertiliser solution. For instance, large scale irrigation is often carried out by spraying water onto a crop area. Spray pumps are well known which spray water from a spray manifold onto the crop area and which are designed so that concentrated fertiliser solution can be dosed into the pump, mixed with the water and thus diluted before the water is sprayed onto the crop area.

It is also known that some irrigation systems such as furrow irrigation and spray irrigation, as well as naturally occurring processes, can lead to erosion of the soil. It is known to use various polymers as soil stabilisers by applying them to the soil in aqueous solution. This stabilises the soil against erosion. Polymers of acrylamide and other ethylenically unsaturated monomers have been used as soil stabilisers. It has been generally accepted that the polymers which give optimum soil stabilisation have retatively low anionic content (eg 5 to 30 wt.%) and also have relatively high intrinsic viscosity, for instance above 15 dl/g. Such polymers tend to form viscous aqueous solutions unless used at low concentration. Normal industrial practice is to mix the polymer in powder or reverse phase emulsion form with water in special dissolution apparatus so as to form an aqueous solution of the polymer having a concentration of, for instance, 0.2 to 2 wt.%. This solution can then be dosed into the irrigation water.

US 3,798,838 describes a method of reducing the water permeability of soils by contacting them with an aqueous solution containing a water-soluble nutrient and a water-soluble partially hydrolysed polyacrylamide. The solution which is contacted with the soil may not contain more than 2 wt.% polymer or 5 wt.% nutrient. Preferred amounts are much lower, for instance not more than 0.3 wt.% polymer and not more than 0.05 wt% nutrient In the examples a dilute solution of this type is produced. The concentration of polyacrylamide is 70 ppm. The level of nutrient is 1.15 wt.%. The publication states that the polymer and the nutrients should be dissolved in the irrigation water. Thus the polymer and nutrient would be added separately directly to the irrigation water to give the dilute solution applied to the soil. There is no suggestion to provide a more concentrated solution containing both components. If polymer were to be included in a solution with the concentrated aqueous solution of fertiliser, the amount of polymer required to give an appropriate concentration on the soil (after dilution to the degree required for the fertiliser) would be high, ie at least 2 wt.%. The polyacrylamide used in the Examples has 20 to 30% of its amide groups hydrolysed, ie 20 to 30% anionic content We have found that polymers of this type produce a highly viscous solution at such concentrations. As a result the solution cannot be processed in the same apparatus as standard fertiliser solution. Therefore the system of US 3,798,838 is limited to separate addition of the polymer and the fertiliser to the irrigation water. This necessitates, in commercial practice, the provision of two separate addition points and make-up systems.

Other publications describe various compositions which contain both a conventional low anionic content soil conditioner and a fertiliser, such as EP-A-586,911 and JP-A-74/144087. JP-A-07/322753 and JP-A-07/099833 each describe soil conditioning compositions containing acrylamide polymers. Aqueous compositions containing polymer and fertiliser are not disclosed. JP-A-73/037738 also discloses a composition suitable for spraying comprising fertiliser, polyacrylamide and seeds, together with a collection of other materials such as cellulose and lignin sulphonic acid. JP-A-51/124578 also discloses a liquid fertiliser composition containing phosphorus fertiliser and a copolymer of acrylamide and unspecified amounts of potassium acrylate.

It would be desirable to be able to provide a combined composition which gives both fertilisation and soil stabilisation benefits, so as to avoid the need for separate addition points, but to be able to use dosing equipment currently in place for irrigation systems, in particular equipment in place for processing fertiliser solution. Such systems include pivots, wheel-lines and drip systems.

According to the invention we provide an aqueous soil treatment composition comprising water and, in solution,
(a) an ionic (eg inorganic or urea-containing) water-soluble fertiliser at a concentration of at least 10 wt.%, and
(b) a water-soluble anionic polymer which has intrinsic viscosity at least 6 dl/g and is formed from water-soluble monomer or monomer blend of which at least 40 wt.% is anionic monomer.

Thus we provide a single pack product which gives both fertilisation and soil stabilisation benefits. The product is thus a growth-promoting composition. It can be produced by adding polymer to a standard concentrated solution of fertiliser, at a concentration sufficiently high to provide appropriate polymer concentration on the soil after dilution of the concentrated solution in the standard manner for fertiliser solutions. We find that the defined anionic polymers having relatively high anionic monomer content give rise to fewer of the viscosity problems which we observe with the standard, non-ionic or low anionic content, soil stabilisation polymers. In fact, in the solution of fertiliser they have relatively low viscosities which can even be below 1,000 cps, in particular below 500 cps. Thus the viscosity of the fertiliser solution is not increased to an inconvenient degree and the aqueous composition of the invention can be processed using the equipment which is in place for processing of solution of fertiliser alone. A further advantage of the defined polymers is that their low viscosity in the composition means that they can be added without difficulty to the fertiliser solution at the fertiliser production plant. The prevention of excessive viscosity allows the compositions to be processed at the fertiliser production plant using conventional equipment.

We believe that the interaction between the fertiliser which is an ionic salt, and the defined anionic polymer is important in the invention. We believe that the polymer dissolves in the aqueous composition but in the presence of the fertiliser salt the polymer molecules are not fully extended, thus reducing the viscosity of the composition. However, as the composition is diluted during an irrigation process by mixing with the irrigation water, the concentration of fertiliser is reduced and the polymer molecules are able to extend fully and act as soil stabilisers. Similarly, if the composition is placed directly onto an area of soil, the fertiliser gradually dissolves into the soil, thus reducing its concentration around the polymer molecules, which can again extend and act as soil stabilisers.

The invention provides an aqueous composition in which the defined polymer (b) is dissolved. That is, the polymer is taken into the solution such that substantially no visible solid material remains. For some combinations of polymer and fertiliser, some solid lumps or other material visible to the naked eye may remain. These may be filtered out before use. It is not necessary that the polymer molecules be fully extended and solvated within the solution. In fact, we believe that it is useful in the invention that the polymer molecules, although dissolved, are not fully extended in the solution. They thus give rise to lower viscosity than they would if fully extended. The polymer must be water-soluble and in particular is soluble in an aqueous solution of fertiliser having the same concentration of fertiliser as the final aqueous composition which is desired to be produced. Generally the polymer is substantially linear and is not crosslinked.

The polymer has an intrinsic viscosity of from 9 to 12 dl/g. In this specification intrinsic viscosity is measured by suspended level viscometer at 20°C in 1 M sodium chloride buffered to pH 7. That is, it is of sufficiently high molecular weight to give a soil stabilisation effect and is not a low molecular weight material which would act as a dispersant.

The polymer is formed from water-soluble monomer or monomer blend, usually water-soluble ethylenically unsaturated monomer. The anionic content, ie the proportion of anionic monomer in the monomer blend used to form the polymer, is from 60 to 80 wt%.

The monomer blend used to form the polymer comprises at least 60 wt.% anionic monomer. This may be any suitable anionic ethylenically unsaturated monomer. It can be a sulphonic monomer, often as sodium or other alkali metal salt, for instance acrylamido propane sulphonic add (AMPS). it is generally preferred that the anionic monomer is an ethylenically unsaturated carboxylic monomer, in particular acrylic or methacrylic monomer. Salts of acrylic acid are preferred, for instance ammonium or alkali metal, in particular sodium, salts.

Generally the anionic monomer is copolymerised with 20-40 wt% of a non-ionic monomer, usually ethylenically unsaturated water-soluble non-ionic monomer such as acrylamide or methacrylamide, preferably acrylamide.

Particularly preferred polymers are copolymers of acrylamide with sodium acrylate.

The polymer is included in the composition in an amount such that when the composition is diluted for irrigation, to the degree of dilution conventionally used for fertiliser solutions, it provides adequate polymer concentration on the soil to give acceptable soil stabilisation performance. Polymer concentration in the aqueous soil treatment composition of the invention is generally from 0.2 to 10 wt.%, in particular at least 0.5 or at least 1 wt.%. Preferably it is at least 1.5 wt.%. Often it is not more than 7 wt.%, and particularly preferred compositions contain from 2 to 5 wt.% polymer.

The composition also contains an ionic fertiliser in solution. Thus the fertiliser must be water-soluble. Fertilisers for use in the invention can also be described as inorganic or urea-containing fertilisers. The fertiliser is present in a concentration at least 10 wt.% and is usually as high as is convenient, for instance at least 20 wt.%. Preferably it is at least 30 wt.%. It can be as high as 70 or 80 wt.% but is usually not more than 60 wt.%. Preferred concentration ranges are 30 or 40 to 55 wt.%, for instance around 50 wt.%.

Urea and any of the known inorganic fertiliser materials can be used, which provide nitrogen, phosphorus and/or potassium, either alone or in a mixture. These contain ionic salts and include ammonium nitrate, ammonium sulphate, mono ammonium phosphate, diammonium phosphate, mono potassium phosphate, dipotassium phosphate, polyphosphate salts, potassium chloride, potassium sulphate and calcium nitrate.

Examples include urea/ammonium nitrate (32-0-0), potassium chloride (0-0-10), ammonium sulphate (8-0-0-9S), a blend of calcium and ammonium nitrate, and blended fertilisers with the following analyses: 18-0-8, 10-0-10, 3-18-18, 0-0-25-17S, 10-10-10 and 14-2-10-2+2.5% organic matter (OM).

The invention is particularly useful when it is known to be desired to use a particular fertiliser on the relevant soil area. The invention allowes the operator to select a polymer which gives, in combination with that chosen fertiliser, an appropriate balance of viscosity of the final composition and soil stabilisation performance. We find that any given polymer will not necessarily give optimum results for all fertilisers, but generally we find that polymers of the types defined in the invention are capable of giving an acceptable range of results in combination with a range of fertilisers. The particular intrinsic viscosity and anionic content within the claimed ranges which are optimum for combination with any given fertiliser, as well as the concentration of polymer and the concentration of fertiliser, can be established by experimentation.

In particular we find that for use with UAN (32-0-0) solution polymers of anionic content 60 to 70 wt.% and IV 9 to 11 dl/g, for instance anionic content 65 wt.% and IV 10 dl/g, give low viscosity and good soil stabilisation performance. Polymers of higher anionic content, for instance from 90 to 100 wt.%, and slightly higher intrinsic viscosity, for instance 12 dl/g, give higher viscosity with the same fertiliser solution although the compositions can still be handled, and show particularly good stabilistion performance.

Polymers of anionic content 60 to 70 wt.% and IV 9 to 11 dl/g give low viscosity and good soil conditioning performance in combination with fertilisers 8-0-0-9S (ammonium sulphate) and 0-0-10 (KCl).

In combination with 8-0-0-9S, polymers of anionic content 90 to 100 wt.% and IV 12 dl/g give somewhat higher viscosity, but again the compositions remain handleable, and show excellent stabilisation performance. These polymers similarly give compositions of high but acceptable viscosity and excellent stabilisation with fertilisers 10-0-10 and 10-10-10.

With fertilisers 18-0-18, 10-0-10, 10-10-10 and 14-2-10-2+2.5% OM, polymers of anionic content 60 to 70 wt.% and IV 9 to 11 dl/g also give reasonable viscosity and stabilisation performance.

Polymers of anionic content 45 to 50 wt.% (eg about 47 wt.%) and IV 10 to 12 dl/g (eg about 11 dl/g) also give reasonable viscosity and stabilisation performance with 0-0-10 (KCI).

The aqueous composition of the invention can be made in any convenient manner. For instance polymer may be added to water followed by fertiliser or the two may be added simultaneously. Alternatively, fertiliser may be added to a preformed solution of polymer. However, generally it is preferred that the polymer is added to a preformed solution of the fertiliser. In particular it is preferred that the polymer is added in solid form, ie powder or bead. It is possible to add it in other forms, such as reverse phase dispersion, but solid is preferred. Preferred solids are in the size range 70 to 2,000 mm and are made in standard manner, for instance by gel or bead polymerisation followed by comminution and if necessary drying.

The polymer, if added as powder, can be added using known systems such as those described in US 4,086,663 and WO94/19095 and systems available from Allied Colloids under the name JetWet (trade mark).

Thus in the invention we provide a process for the production of an aqueous composition of the invention comprising providing a preformed aqueous solution of the fertiliser (a) and mixing into it polymer (b) in powder form.

The thus formed composition should have viscosity which renders the composition easy to handle. It should in particular be easy to handle (ie preferably pumpable, pourable or sprayable) in the equipment which is presently used for addition of concentrated fertiliser solution to irrigation water and for application of concentrated fertiliser solution alone to soil. The polymer may be added to the fertiliser at the facility of the fertiliser manufacturer and thus the viscosity should be low enough that the resulting solution can handled by equipment presently in place in such facilities. The viscosity is not more than 4,000 cPs, more preferably not more than 3,000 cPs. in particular it is not more than 2,000 and especially not more than 1,000 cPs. Particularly preferably it is not more than 600 cPs. Usually it is at least 100 cPs, and often at least 200 cPs. Particularly preferred compositions have final viscosity of from 200 to 500 cPs. In this specification viscosity is measured using a Brookfield LVT viscometer at 30 rpm using spindle 4.

Thus aqueous composition of the invention may be applied directly to soil as a fertiliser/soil conditioner composition. However, the composition of the invention is intended particularly as a concentrate for use in irrigation, in which processes it will be diluted and applied to soil areas. Thus it may contain any materials known for inclusion in such compositions. It generally does not contain additional materials such as oxidising agents, reducing agents, soil materials or seed materials.

The invention also provides a soil treatment process comprising irrigating an area of soil with water to which has been added an aqueous soil treatment composition of the invention.

Suitable irrigation processes include drip irrigation, furrow irrigation and spray irrigation. In particular the composition is suitable for use in processes of spray irrigation where irrigation water is pumped to a spray manifold and sprayed over a very large crop area, for instance at least one hectare (ha), and even up to 100 ha. Such methods comprise pumping water through feed ducting and a mixing zone to a spray manifold supplying one or more spraying devices by which the water is sprayed onto the crop area to be irrigated, and the aqueous composition of the invention is metered into the water at or before the mixing zone. Processes of this general type are described in our unpublished PCT Application No. PCT/GB98/01763. In that application it is essential to supply polymer in the form of a dispersion of water-soluble polymer particles in a liquid. In the present case the polymer is of course included in the solution of fertiliser which is metered in the standard manner and thus this system is not necessary int the present case. However, other features of the system described in that application can however be applied herein.

The invention will now be illustrated with reference to the following examples.

### Examples

In the following examples various fertilisers were used, as follows:
Urea/Ammonium Nitrate (32-0-0)
Muriate of Potash (0-0-10)
Sulfate of Ammonia (8-0-0-9S)
Calcium Ammonium Nitrate
Blended fertilisers with analysis:
18-0-8
10-0-10
3-18-18
0-0-25-17S
10-10-10
14-2-10-2+2.5% OM

### Example 1

Several polymers, of medium to high anionic charge and in dry powder form, were evaluated initially for their solubility and viscosity in concentrated solutions of fertiliser. This was assessed by adding the polymer powder to the fertiliser solution and tumbling for 4 to 5 hours at slow medium speed. The polymer powder was added in such an amount as to give a concentration in the composition of about 2 wt.%.

The viscosities of the resultant products were measured using a Brookfield LVT Viscometer, spindle 4 at 30 rpm.

If the resultant product was not highly viscous, ie was pourable, the flocculation and stabilisation tests were performed. Both of these tests give an indication of the soil stabilisation efficacy of the relevant polymer in combination with the relevant fertiliser. These tests were evaluated using 34 ppm hardness water, to simulate the irrigation water commonly used in the USA (a region in which large-scale irrigation is widely practised).

The polymers used were as follows:
Polymer A: Copolymer of 14.6 wt.% sodium acrylate and 85.4 wt.% acrylamide, IV 16 dl/g.
Polymer B: Copolymer of 65 wt.% sodium acrylate and 35 wt.% acrylamide, IV 10 dl/g.
Polymer C: Copolymer of 95.5 wt.% sodium acrylate and 4.5 wt% acrylamide, IV 13 dl/g.
Polymer D: Copolymer of 40 wt.% sodium AMPS and 60 wt.% acrylamide, IV 18 dl/g.
Polymer E: Copolymer of 20 wt.% sodium AMPS and 80 wt.% sodium acrylate, of low IV.

The fertiliser solutions were all used as supplied by the manufacturer, with varying solids content of from 10 to 80 wt.% solids.

### Flocculation

The 34 ppm hardness water was added to a 1,000 ml stoppered measuring cylinder (∼950 g). The solution of polymer and fertiliser was then added at 15 ppm before the remainder of the water was added, to total 1,000 g. The cylinder was inverted several times to allow the product to disperse. Soil fines (< 500 mm size particles of a clay loam soil), 20 g, were added to the cylinder and the cylinder shaken vigorously for 20 seconds, before leaving to stand for a further 2 minutes, to allow flocculation to occur. An aliquot was then extracted from a predetermined depth and the turbidity measured, to assess the effectiveness of the product. The clearer the water, the more effective the product.

### Stabilisation

The test above was repeated, using standardised (sieved and dried) soil crumbs and not fines. In this test, the cylinder was not shaken vigorously, but was inverted 10 times in 20 seconds, before leaving to stand for 2 minutes. The turbidity was then measured.

A control was also performed for the flocculation and stabilisation tests, where the water alone was used, without any polymer present.

The results in Table 1 below show the effect of the polymers on flocculation/soil stabilisation. The stabilisation test was only performed on products which were pourable and which produced good flocculation results.

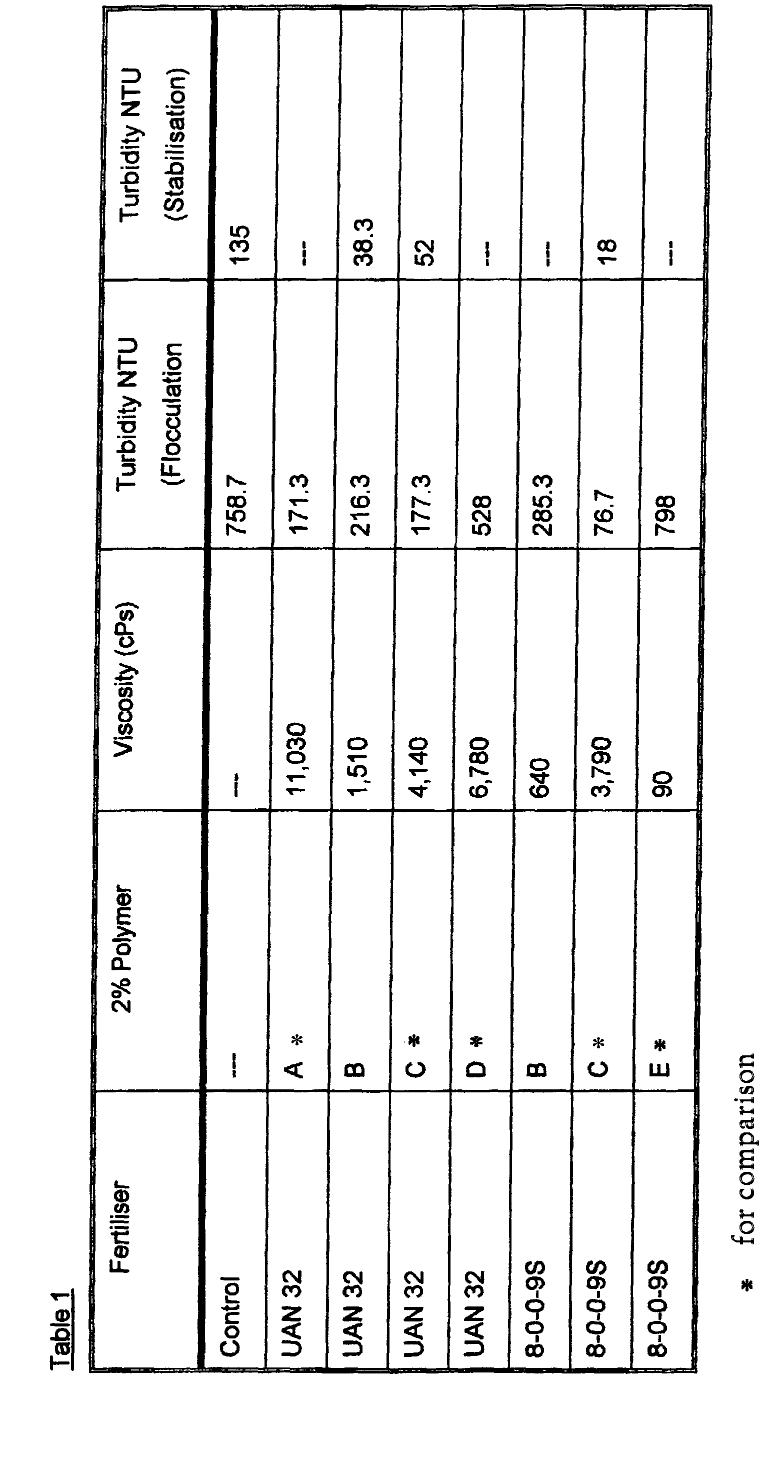

It can be seen from this example that Polymer B, which has anionic content of 65 wt.% and IV 10 dl/g, is particularly suitable for providing low viscosity, and thus pumpable and sprayable, compositions. In particular it gave adequately low viscosity with two different fertilisers, UAN 32 and 8-0-0-9S. In this particular test, flocculation in the 8-0-0-9S solution was not optimum.

It can also be seen that Polymer C, which has a higher anionic content of 95.5 wt.%, gives higher viscosities than Polymer B, but lower than those of Polymers A and D in UAN 32 solution. In addition, it gives good flocculation and stabilisation performance.

Polymers A and D gives rather high viscosity values and Polymer E does not give good flocculation.

### Example 2

In this Experiment the effects of the IV and anionic content of various polymers in various fertiliser solutions are assessed.

### FED Experiment

A factorial experiment design, using solid grade acrylamide/sodium acrylate polymers (added at 2% w/w to the concentrated fertiliser solution), covering a range of IV's from 10 to 24 and anionic contents of 0 to 100%, was evaluated. In each case, the viscosity and flocculation of the resultant solutions were measured as in Example 1 above. This was performed with a potassium chloride solution (10% K⁺), which was similar to the 0-0-10(KCl) fertiliser solution. A control was performed, using 15 ppm of the KCI solution, without added polymer.

The factorial experimental design results are in Table 2 below. Some products are listed twice. This is because two different batches were assessed. It will be seen that polymers which can give rather high viscosities can also give variable results from batch to batch.

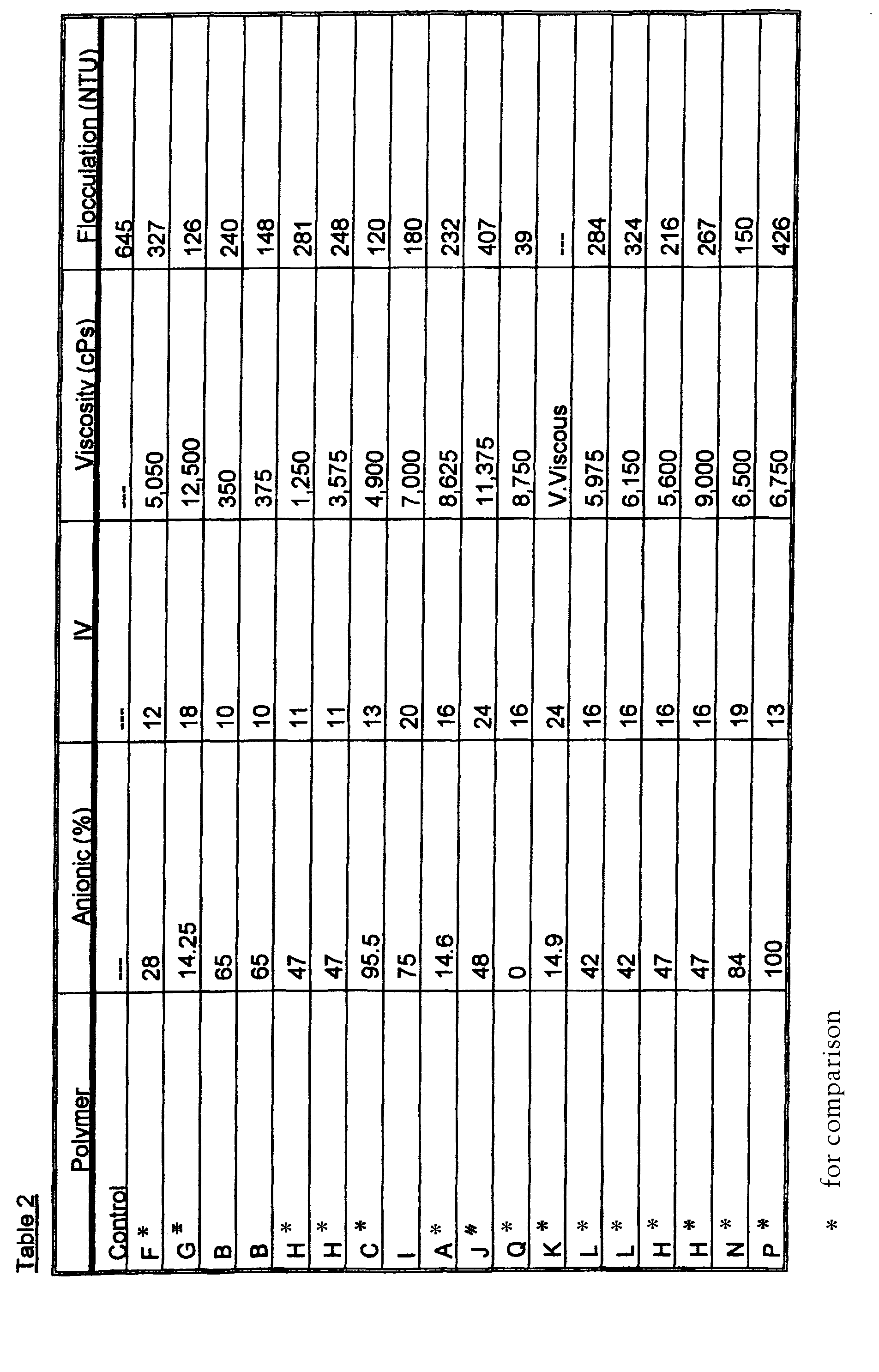

It can be seen from these results that Polymer B again gives a low viscosity and good flocculation performance this fertiliser solution.

Polymers F, G, A, Q and K all have anionic content below 40 wt.% and give rather high viscosity values, in particular Polymers G, A, Q and K. From the point of view of achieving low viscosity in combination with adequate flocculation performance, it appears that a value of IV of from about 9 or 10 to about 13 or 14 tends to be optimum in combination with anionic content of at least 40 wt.%. It also appears that anionic content of from about 55 to 80 wt.% may be optimum.

These tests were carried out with a fertiliser solution similar to 0-0-10 (KCI) solution. Certain of the polymers may give better performance with other fertiliser types.

### Example 3

In this Example flocculation tests were also performed on the optimum polymers determined in Example 1 for each fertiliser, using a different soil type. These were assessed using soil of a loamy sand nature.

The optimum products to use in UAN (32-0-0) and 8-0-0-9S fertilisers were found in Example 1 to be Polymer B and Polymer C respectively. These were evaluated with a second soil type, a loamy sand. The 8-0-0-9S was also assessed with Polymer B, as this produced a much less viscous solution (640 cPs), than Polymer C (3790 cPs). Results were as follows.

**Table 3**

| Fertiliser & Polymer | Flocculation (NTU) | Control (NTU) |
|---|---|---|
| **KCl + B** | 201 (194)* | 519 |
| **UAN + B** | 267 (216)* | 574 |
| 8-0-0-9S + C | 78 (77)* | 507 |
| 8-0-0-9S + C | 335 (285)* | 507 |

| | | |
|---|---|---|
| *(The figures in brackets are the original turbidity results for flocculation, when performed on the first soil type in Example 1, a clay loam). | | |

It can be seen that although flocculation was in general not as efficient as on the previously used soil, it was nevertheless effective.

### Example 4

The solubilities of Polymer B and Polymer C (the optimum polymers determined in Example 1) were assessed at 2% w/w in various fertiliser solutions. The viscosities of the polymers in fertiliser solutions were measured, if the polymers were soluble, and so was the flocculation efficiency. Results are below in Table 4.

**Table 4**

| Fertiliser | 2% Polymer | Viscosity (cPs) | Flocculation |
|---|---|---|---|
| 18-0-8 | B | 1,000 | 155 |
| 18-0-8 | C* | 3,600* | ― |
| 10-0-10 | B | 900 | 151 |
| 10-0-10 | C* | 3,950 | 124 |
| 10-10-10 | B | 950 | 306 |
| 10-10-10 | C* | 3,850 | 297 |
| 0-0-25-17S | B | * | |
| 0-0-25-17S | C* | 10,000 | ― |
| 14-2-10-2+2.5% OM | B [Mag 525] | 1,500 | 205 |
| 14-2-10-2+2.5% OM | C*[Alclar W5] | 7,500 | ― |

| | | | |
|---|---|---|---|
| * for compariton | | | |
| *- large quantity of undissolved polymer after tumbling overnight. | | | |

Both products were insoluble in the 3-18-18 fertiliser solution.

These results again demonstrate the general usefulness of Polymer B, which gave low viscosity solutions and good flocculation for a range of fertilisers. Polymer C could also give reasonable viscosity with certain fertilisers such as 18-0-8, 10-0-10 and 10-10-10.

## Claims

1. An aqueous soil treatment composition comprising water and, in solution,
(a) an ionic water-soluble fertiliser in an amount of at least 10 wt.%, and
(b) a water-soluble anionic polymer which has intrinsic viscosity of from 9 to 12 dl/g and is formed from water-soluble monomer blend comprising from 60 to 80 wt.% anionic monomer and from 40 to 20 wt.% non-ionic monomer, the composition having a viscosity of not more than 4,000 cps.

2. A composition according to any preceding claim in which the polymer (b) is a copolymer of acrylamide with an alkali metal salt of acrylic acid.

3. A composition according to any preceding claim in which the polymer (b) is present in an amount of from 2 to 5 wt.%.

4. A composition according to any preceding claim in which the fertiliser (a) is present in an amount of from 20 to 60 wt.%.

5. A composition according to any preceding claim, which has a viscosity of not more than 1,000 cps.

6. A composition according to any preceding claim, which has a viscosity of from 200 to 500 cps.

7. A composition according to any preceding claim in which the polymer (b) has been added to the composition in the form of a powder.

8. A soil treatment process comprsing irrigating an area of soil with water to which has been added an aqueous soil treatment composition as defined in claim 1.

9. A process according to claim 8 in which the irrigation is by furrow irrigation, drip irrigation or spray irrigation.

10. A process according to claim 8 in which water is pumped through feed ducting and a mixing zone to a spray manifold supplying one or more spraying devices by which the water is sprayed onto a crop area and the aqueous soil treatment composition is metered into the water at or before the mixing zone.

11. A method for the production of an aqueous soil treatment composition as defined in claim 1 comprising providing an aqueous solution of fertiliser (a) and mixing with it polymer (b) in powder form.

12. A process according to claim 8 or a method according to claim 11 in which the aqueous soil treatment composition has any of the additional features of claims 2 to 10.

## Patentansprüche

1. Wässrige Bodenbehandlungszusammensetzung, umfassend Wasser und, in Lösung,
(a) ein ionisches wasserlösliches Düngemittel in einer Menge von mindestens 10 Gew.-%, und
(b) ein wasserlösliches anionisches Polymer mit einer Strukturviskosität von 9 bis 12 dl/g, das aus einer wasserlöslichen Monomermischung gebildet ist, umfassend 60 bis 80 Gew.-% anionisches Monomer und 40 bis 20 Gew.-% nichtionisches Monomer, wobei die Zusammensetzung eine Viskosität von nicht mehr als 4.000 cps besitzt.

2. Zusammensetzung nach mindestens einem vorangehenden Anspruch, wobei das Polymer (b) ein Copolymer von Acrylamid mit einem Alkalimetallsalz von Acrylsäure ist.

3. Zusammensetzung nach mindestens einem vorangehenden Anspruch, wobei das Polymer (b) in einer Menge von 2 bis 5 Gew.-% vorliegt.

4. Zusammensetzung nach mindestens einem vorangehenden Anspruch, wobei das Düngemittel (a) in einer Menge von 20 bis 60 Gew.-% vorliegt.

5. Zusammensetzung nach mindestens einem vorangehenden Anspruch, die eine Viskosität von nicht mehr als 1000 cps besitzt.

6. Zusammensetzung nach mindestens einem vorangehenden Anspruch, die eine Viskosität von 200 bis 500 cps besitzt.

7. Zusammensetzung nach mindestens einem vorangehenden Anspruch, wobei das Polymer (b) zu der Zusammensetzung in Form eines Pulvers zugegeben worden ist.

8. Bodenbehandlungsverfahren, umfassend die Irrigation eines Bodenbereichs mit Wasser, welchem eine wässrige Bodenbehandlungszusammensetzung gemäß Anspruch 1 zugegeben worden ist.

9. Verfahren nach Anspruch 8, wobei die Irrigation mittels Furchenirrigation. Tropfirrigation oder Sprühirrlgation erfolgt.

10. Verfahren nach Anspruch 8, wobei Wasser durch einen Zufuhrkanal und eine Mischzone zu einem Sprühverteiler gepumpt wird, welcher eine oder mehrere Sprüheinrichtungen versorgt, wodurch das Wasser auf einen Feldpflanzenbereich gesprüht wird und die wässrige Bodenbehandlungszusammensetzung in das Wasser bei oder vor der Mischzone eindosiert wird.

11. Verfahren zur Herstellung einer wässrigen Bodenbehandlungszusammensetzung wie in Anspruch 1 definiert, umfassend das Vorsehen einer wässrigen Lösung von Düngemittel (a) und Vermischen dieser mit Polymer (b) in Pulverform.

12. Verfahren nach Anspruch 8 oder Verfahren nach Anspruch 11, wobei die wässrige Bodenbehandlungszusammensetzung irgendeines der zusätzlichen Merkmale der Ansprüche 2 bis 10 aufweist.

## Revendications

1. Composition aqueuse de traitement du sol comprenant de l'eau et, en solution,
(a) un fertilisant hydrosoluble ionique dans une quantité d'au moins 10 % en poids, et
(b) un polymère anionique hydrosoluble qui possède une viscosité intrinsèque de 9 à 12 dl/g et qui est formé à partir d'un mélange de monomères hydrosolubles comprenant de 60 % à 80 % en poids de monomère anionique et de 40 % à 20 % en poids de monomère non-ionique, la composition ayant une viscosité pas supérieure à 4000 cPs.

2. Composition selon l'une quelconque des revendications précédentes, dans laquelle le polymère (b) est un copolymère d'un acrylamide avec un sel de métal alcalin d'un acide acrylique.

3. Composition selon l'une quelconque des revendications précédentes, dans laquelle le polymère (b) est présent dans une quantité de 2 % à 5 % en poids.

4. Composition selon l'une quelconque des revendications précédentes, dans laquelle le fertilisant (a) est présent dans une quantité de 20 % à 60 % en poids.

5. Composition selon l'une quelconque des revendications précédentes, qui a une viscosité pas supérieure à 1000 cPs.

6. Composition selon l'une quelconque des revendications précédentes, qui a une viscosité de 200 à 500 cPs.

7. Composition selon l'une quelconque des revendications précédentes, dans laquelle le polymère (b) a été ajouté à la composition sous la forme d'une poudre.

8. Processus de traitement du sol comprenant l'irrigation d'une zone du sol avec de l'eau à laquelle a été ajoutée une composition aqueuse de traitement du sol définie selon la revendication 1.

9. Processus selon la revendication 8, dans lequel l'irrigation est une irrigation par canaux, une irrigation au goutte à goutte ou une irrigation par aspersion.

10. Processus selon la revendication 8, dans lequel l'eau est pompée via une conduite d'alimentation et une zone de mélange vers une tubulure d'aspersion alimentant un ou plusieurs dispositifs d'aspersion par lesquels l'eau est vaporisée sur une zone de culture et la composition aqueuse de traitement du sol est dosée dans l'eau dans ou avant la zone de mélange.

11. Procédé pour la production d'une composition aqueuse de traitement du sol définie selon la revendication 1 comprenant la fourniture d'une solution aqueuse de fertilisant (a) et le mélange avec elle d'un polymère (b) sous forme de poudre.

12. Un processus selon la revendication 8 ou un procédé selon la revendication 11 dans lequel la composition aqueuse de traitement du sol possède l'une quelconque des caractéristiques additionnelles des revendications 2 à 10.
